# EUROPEAN PATENT SPECIFICATION

(11) **EP 4 333 152 B1**
(45) Date of publication and mention of the grant of the patent: **14.01.2026**
(21) Application number: 22862936.6
(22) Date of filing: 20.07.2022
(51) Int. Cl.: H01M 10/0583, H01M 4/13, B65H 45/101, H01M 10/04, H01M 10/0525, H01M 50/463

(54) **ELECTRODE ASSEMBLY, BATTERY CELL, BATTERY, AND ELECTRICAL DEVICE**
ELEKTRODENANORDNUNG, BATTERIEZELLE, BATTERIE UND ELEKTRISCHE VORRICHTUNG
ENSEMBLE ÉLECTRODE, ÉLÉMENT DE BATTERIE, BATTERIE ET DISPOSITIF ÉLECTRIQUE

(30) Priority: 31.08.2021 CN 202111015178
(43) Date of publication of application: 06.03.2024
(73) Proprietor: Contemporary Amperex Technology (Hong Kong) Limited, Central, Central And Western District (HK)
(72) Inventor: LIAO, Ruhu, Ningde, Fujian 352100 (CN); ZENG, Gang, Ningde, Fujian 352100 (CN); ZHAO, Fenggang, Ningde, Fujian 352100 (CN); DAI, Ya, Ningde, Fujian 352100 (CN); WANG, Jianlei, Ningde, Fujian 352100 (CN)
(74) Representative: Rowlands, Stuart Michael
(86) International application number: PCT/CN2022/106702
(87) International publication number: WO 2023/029795

(56) References cited:
- WO-A1-2021/109363
- CN-A- 111 430 773
- CN-A- 113 224 391
- CN-U- 206 379 432
- CN-U- 213 340 434
- CN-U- 213 340 434
- JP-A- 2013 218 804
- KR-A- 20030 031 818
- US-A1- 2012 058 387

## Description

### Technical Field

The present application relates to the technical field of battery manufacturing, in particular to an electrode assembly, a battery cell, a battery and an electrical device.

### Background

As energy saving and emission reduction are the key to the sustainable development of automobile industry, electric vehicles have become an important part of the sustainable development of automotive industry due to their advantages of energy saving and environmental protection. Battery technology is an important factor related to the development of electric vehicles.

In the battery manufacturing process, the manufacturing cost is high.

CN213340434U relates generally to an electrode assembly for a battery.

JP2013218804A relates generally to an electrode body of a storage element such as a secondary battery.

### Summary of the Invention

The present application aims to provide an electrode assembly, a battery cell, a battery and an electrical device. The manufacturing cost of the electrode assembly is low.

The present application is implemented through the following technical solutions:

Aspects of the invention are set out in the claims. In the first aspect, the present application provides an electrode assembly, comprising: a first electrode sheet, comprising a plurality of bending segments and a plurality of stacking segments arranged in layers, wherein each of the bending segments is configured to connect two adjacent stacking segments, the first electrode sheet has a first broken seam, and the first broken seam extends in the width direction of the first electrode sheet to break the first electrode sheet into two separate parts; and a plurality of second electrode sheets, wherein the polarity of the second electrode sheet is opposite to the polarity of the first electrode sheet, and each of the second electrode sheets is arranged between two adjacent stacking segments in the stacking direction of the plurality of stacking segments.

In the prior art, the first electrode sheet of a stacked electrode assembly is usually a continuous strip structure. In the stacking process, the first electrode sheet is broken after a part of the stacked structure is completed but the number of layers required for the stacked electrode assembly is not reached, resulting in scrapping of the completed stacked part of the electrode assembly. According to the electrode assembly provided in the embodiments of the present application, the first electrode sheet with the first broken seam is folded so that a plurality of stacking segments cooperate with a plurality of second electrode sheets to meet the requirement for the number of layers of the electrode assembly, and the broken first electrode sheet is reasonably used, thereby reducing the material waste and reducing the manufacturing cost.

According to some embodiments of the present application, the first broken seam is arranged at the bending segment.

**In** the above solution, in a lithium-ion battery, the first broken seam is located at the bending segment, and the stacking segment and the adjacent second electrode sheet have a larger corresponding region, so as to ensure more lithium intercalation space and reduce the occurrence of lithium plating.

According to some embodiments of the present application, the first broken seam is arranged at the center of the bending segment.

**In** the above solution, the first broken seam is located at the center of the bending segment, so that the bending segments of the parts on both sides of the first broken seam are symmetrical, so as to realize the correspondence between the parts of the first electrode sheet on both sides of the first broken seam.

According to some embodiments of the present application, after the first electrode sheet is unfolded, the width of the first broken seam is 0.1-2 mm.

In the above solution, the width range of the first broken seam is convenient for realizing the correspondence between the parts of the first electrode sheet on both sides of the first broken seam, thereby ensuring the smoothness of the stacking segment and avoiding the interference of the two parts of the first electrode sheet.

According to some embodiments of the present application, the ends of two adjacent stacking segments in the bending direction of the bending segment are exposed at the first broken seam.

In the above solution, the ends of two adjacent stacking segments on the same side are exposed at the first broken seam, that is, the two adjacent stacking segments are not connected with the bending segment, thereby being convenient for realizing the stacked alignment of the plurality of stacking segments.

The electrode assembly further comprises: two diaphragms attached to both sides of the first electrode sheet in the thickness direction, respectively, to isolate the first electrode sheet and the second electrode sheet, wherein the diaphragm is a continuous strip structure, and the two separate parts of the first electrode sheet on both sides of the first broken seam are connected by the diaphragm.

In the above solution, the two diaphragms are attached to both sides of the first electrode sheet in the thickness direction, respectively to bind the first electrode sheet, so that the two parts of the electrode sheet broken at the first broken seam can be connected to reduce the probability of misalignment of the broken first electrode sheet.

According to some examples not falling under the scope of the invention, the electrode assembly further comprises: two diaphragms attached to both sides of the first electrode sheet in the thickness direction, respectively, to isolate the first electrode sheet and the second electrode sheet, wherein the diaphragm is provided with a second broken seam, the second broken seam extends in the width direction of the diaphragm to break the diaphragm, and the second broken seam corresponds to the first broken seam in position.

In the above solution, the second broken seam corresponds to the first broken seam in position, and the parts of the diaphragm on both sides of the second broken seam are two independent parts, so as to facilitate the combination of parts of the electrode assembly with insufficient layers after bending, so that the electrode assembly formed by the combination meets the use needs, and the material is reasonably used.

According to some embodiments of the present application, the first electrode sheet is a negative electrode sheet, and the second electrode sheet is a positive electrode sheet.

In the above solution, in a lithium-ion battery, the positive electrode sheet is located between two adjacent stacking segments of the negative electrode sheet, and the end of the stacking segment is connected with the bending segment, so that the length of the negative electrode sheet is greater than the length of the positive electrode sheet, so as to provide more lithium intercalation space and reduce the occurrence of lithium plating.

According to some embodiments of the present application, in the stacking direction of the plurality of stacking segments, the projection of each of the stacking segments completely covers the projection of each of the second electrode sheets, and the area of the projection of the stacking segment is greater than the area of the projection of the second electrode sheet.

In the above solution, in a lithium-ion battery, the area of the stacking segment is greater than the area of the second electrode sheet. In the embodiment in which the first electrode sheet is a negative electrode sheet and the second electrode sheet is a positive electrode sheet, the stacking segment has more lithium intercalation space, and the occurrence of lithium plating can be effectively reduced.

In the second aspect, the present application further provides a battery cell, comprising the electrode assembly in the above embodiment.

In the third aspect, the present application further provides a battery, comprising the battery cell in the above embodiment.

In the fourth aspect, the present application further provides an electrical device, comprising the battery cell in the above embodiment, and the battery cell is configured to provide electrical energy.

In the fifth aspect, the present application further provides a method for manufacturing an electrode assembly, comprising: providing a first electrode sheet, the first electrode sheet having a first broken seam, and the first broken seam extending in the width direction of the first electrode sheet to break the first electrode sheet into two separate parts; providing a plurality of second electrode sheets, the polarity of the second electrode sheet being opposite to the polarity of the first electrode sheet; and bending the first electrode sheet to form a plurality of bending segments and a plurality of stacking segments, each of the bending segments connecting two adjacent stacking segments, and each of the second electrode sheets being arranged between two adjacent stacking segments in the stacking direction of the plurality of stacking segments.

According to the method for manufacturing an electrode assembly in the embodiments of the present application, the first electrode sheet with the first broken seam is bent to form a stacked structure to meet the requirement for the number of layers of the electrode assembly, and the broken first electrode sheet is reasonably used, thereby reducing the material waste and reducing the manufacturing cost.

According to some embodiments of the present application, the method for manufacturing an electrode assembly further comprises: providing two diaphragms, the diaphragm being a continuous strip structure, wherein before the first electrode sheet is bent, the two diaphragms are attached to both sides of the first electrode sheet in the thickness direction, respectively, and the plurality of second electrode sheets are attached to the side of the diaphragm away from the first electrode sheet.

In the above solution, the two diaphragms are attached to both sides of the first electrode sheet in the thickness direction, respectively to connect the independent parts of the first electrode sheet into a whole, thereby reducing the probability of misalignment when the first electrode sheet is bent.

According to some embodiments of the present application, in the step of attaching the plurality of second electrode sheets to the side of the diaphragm away from the first electrode sheet, the plurality of second electrode sheets are symmetrically attached to both sides of the first electrode sheet.

In the above solution, the plurality of second electrode sheets are symmetrically attached to both sides of the first electrode sheet, thereby facilitating the stacking operation of the second electrode sheets, and improving the stacking efficiency.

In the sixth aspect, the present application further provides a device for manufacturing an electrode assembly, comprising: a provision module configured to provide a first electrode sheet and provide a plurality of second electrode sheets, wherein the first electrode sheet has a first broken seam, the first broken seam extends in the width direction of the first electrode sheet to break the first electrode sheet into two separate parts, and the polarity of the second electrode sheet is opposite to the polarity of the first electrode sheet; and an assembling module configured to bend the first electrode sheet to form a plurality of bending segments and a plurality of stacking segments arranged in layers, wherein each of the bending segments is configured to connect two adjacent stacking segments, and each of the second electrode sheets is arranged between two adjacent stacking segments in the stacking direction of the plurality of stacking segments.

The additional aspects and advantages of the present application will be partially given in the following description, and parts will be apparent from the following description, or will be understood through the practice of the present application.

### Description of Drawings

In order to more clearly illustrate the technical solutions in the embodiments of the present application, the drawings required for the embodiments of the present application will be briefly described below. It will be apparent that the drawings described below are only some embodiments of the present application. Those skilled in the art can also obtain other drawings according to these drawings without creative efforts.
Fig. 1 is a schematic structural view of a vehicle provided in some embodiments of the present application.
Fig. 2 is an exploded view of a battery provided in some embodiments of the present application.
Fig. 3 is a schematic view of a breakdown structure of a battery cell provided in some embodiments of the present application.
Fig. 4 is a schematic structural view of an electrode assembly provided in some embodiments of the present application.
Fig. 5 is a schematic view of a first broken seam provided in some embodiments of the present application.
Fig. 6 is a partial view of an electrode assembly provided in some embodiments of the present application.
Fig. 7 is a partial view of an electrode assembly provided in some other embodiments of the present application.
Fig. 8 is a partial schematic view of an electrode assembly provided in some other embodiments of the present application.
Fig. 9 is a schematic structural view of an electrode assembly provided in some other embodiments of the present application.
Fig. 10 is a top view of a first electrode sheet before bending provided in some embodiments of the present application.
Fig. 11 is a schematic view of a guide part before bending of a first electrode sheet provided in some embodiments of the present application.
Fig. 12 is a schematic structural view of a guide part provided in some embodiments of the present application.
Fig. 13 is a schematic structural view of a guide part provided in some other embodiments of the present application.
Fig. 14 is a schematic structural view of a groove provided in some embodiments of the present application.
Fig. 15 is a schematic structural view of a groove provided in some other embodiments of the present application.
Fig. 16 is an enlarged view of a part A in Fig. 15.
Fig. 17 is a top view of a first electrode sheet before bending provided in some other embodiments of the present application.
Fig. 18 is a schematic flow chart of a method for manufacturing an electrode assembly provided in some embodiments of the present application.
Fig. 19 is a schematic structural view of a first electrode sheet before bending provided in some embodiments of the present application.
Fig. 20 is an enlarged view of a part B in Fig. 19.
Fig. 21 is a schematic assembly view of second electrode sheets and a first electrode sheet provided in some embodiments of the present application.
Fig. 22 is a schematic block diagram of a device for manufacturing an electrode assembly provided in some embodiments of the present application.

In the drawings, the drawings are not drawn according to an actual scale.

Description of reference numerals: 100 - battery; 10 - box body; 101 - first part; 102 - second part; 1 - battery cell; 11 - end cover; 12 - case; 13 - electrode assembly; 131 - first electrode sheet; 1311 - bending segment; 1311a - first sub-bending segment; 1311b - second sub-bending segment; 1312 - stacking segment; 1313 - first broken seam; 1314 - mark hole; 1315 - coating; 132 - second electrode sheet; 133 - diaphragm; 1331 - second broken seam; 134 - guide part; 1341 - groove; 14 - electrode terminal; 15 - pre-creasing knife; 200 - controller; 300 - motor; 500 - device for manufacturing an electrode assembly; 501 - provision module; 502 - assembling module; 1000 - vehicle.

### Detailed Description

In order to make the objectives, technical solutions and advantages of the embodiments of the present application clearer, the technical solutions in the embodiments of the present application will be clearly and completely described below with reference to the drawings in the embodiments of the present application. It is apparent that the described embodiments are a part of the embodiments of the present application, but are not all of the embodiments. Based on the embodiments in the present application, all other embodiments obtained by those skilled in the art without creative efforts fall within the protection scope of the present application.

Unless otherwise defined, all technical and scientific terms used in the present application have the same meanings as commonly understood by those skilled in the art of the present application. The terms used in the specification of the present application are only for the purpose of describing specific embodiments, but are not intended to limit the present application. The terms "including" and "having" in the specification, claims and the above description of the drawings of the present application as well as any variations thereof are intended to cover non-exclusive inclusion. The terms "first", "second", etc. in the specification, claims or the above drawings of the present application are used for distinguishing different objects, rather than used for describing a specific order or primary and secondary relationship.

The reference to "embodiments" in the present application means that specific features, structures or characteristics described in combination with embodiments may be included in at least one embodiment of the present application. The phrase appearing in each position in the specification does not necessarily refer to the same embodiment, and is not an independent or alternative embodiment mutually exclusive with other embodiments. It is understood explicitly and implicitly by those skilled in the art that the embodiments described in the present application can be combined with other embodiments.

In the description of the present application, it should be noted that unless otherwise clearly specified and defined, the terms "installation", "connected", "connection" and "attachment" should be broadly understood. For example, the connection may be fixed connection, detachable connection, integrated connection, direct connection, indirect connection through an intermediate, or internal communication of two components. For those of ordinary skill in the art, the specific meanings of the above terms in the present application can be understood according to specific situations.

In the present application, the term "and/or" only describes the relationships between associated objects, indicating that there may be three relationships. For example, A and/or B may indicate that there are three conditions: A exists alone, A and B exist simultaneously, and B exists alone. In addition, the character "/" in the present application generally means that the associated objects before and after it are in an "or" relationship.

In the present application, "a plurality of" refers to more than two (including two), similarly, "multiple groups" refers to more than two groups (including two groups), and "multiple pieces" refers to more than two pieces (including two pieces).

In the present application, the mentioned battery refers to a single physical module including one or a plurality of battery cells to provide higher voltage and capacity. For example, the battery mentioned in the present application may include a battery module, a battery pack, etc.

In the present application, the battery cell may include a lithium-ion secondary battery, a lithium-ion primary battery, a lithium-sulfur battery, a sodium/lithium-ion battery, a sodium-ion battery, a magnesium-ion battery, etc., which is not limited in the embodiments of the present application.

The battery mentioned in the embodiments of the present application refers to a single physical module including one or a plurality of battery cells to provide higher voltage and capacity. For example, the battery mentioned in the present application may include a battery module, a battery pack, etc. The battery generally includes a box body for encapsulating one or a plurality of battery cells. The box body can prevent liquid or other foreign matters from affecting the charging or discharging of the battery cell.

The battery cell includes an electrode assembly and an electrolyte solution, and the electrode assembly is composed of a positive electrode sheet, a negative electrode sheet and a separator. The battery cell mainly works by means of the movement of metal ions between the positive electrode sheet and the negative electrode sheet. The positive electrode sheet includes a positive electrode current collector and a positive electrode active material layer, the positive electrode active material layer is coated on a surface of the positive electrode current collector, the current collector which is not coated with the positive electrode active material layer protrudes from the current collector which is coated with the positive electrode active material layer, and the current collector which is not coated with the positive electrode active material layer is used as a positive tab. Taking a lithium-ion battery as an example, the material of the positive electrode current collector may be aluminum, and the positive electrode active material may be lithium cobalt oxide, lithium iron phosphate, ternary lithium, lithium manganate, etc. The negative electrode sheet includes a negative electrode current collector and a negative electrode active material layer, the negative electrode active material layer is coated on a surface of the negative electrode current collector, the current collector which is not coated with the negative electrode active material layer protrudes from the current collector which is coated with the negative electrode active material layer, and the current collector which is not coated with the negative electrode active material layer is used as a negative tab. The material of the negative electrode current collector may be copper, and the negative electrode active material may be carbon, silicon, etc. In order to avoid fusing through heavy current, a plurality of positive tabs are provided and stacked together, and a plurality of negative tabs are provided and stacked together. The material of the separator may be polypropylene (PP), polyethylene (PE), etc.

In the battery manufacturing process, the higher manufacturing cost is mainly caused by the waste of materials. The inventor found that the stacking process of a stacked electrode assembly is easy to waste materials. The reason is that in the related technologies, the stacked electrode assembly is usually characterized in that a first electrode sheet is continuously laid between two layers of diaphragms, the first electrode sheet is bent so that the first electrode sheet has a plurality of bending segments and a plurality of stacking segments, and a second electrode sheet is located between two adjacent stacking segments. The first electrode sheet of the stacked electrode assembly is a continuous strip structure. In the stacking process, the first electrode sheet is broken after a part of the stacked structure is completed but the number of layers required for the stacked electrode assembly is not reached, resulting in scrapping of the completed stacked part of the electrode assembly, so that the materials are wasted, and the manufacturing cost is increased.

In view of this, in order to solve the problem of higher manufacturing cost, the inventor designs an electrode assembly after in-depth research. The electrode assembly includes a first electrode sheet and a plurality of second electrode sheets. The first electrode sheet includes a plurality of bending segments and a plurality of stacking segments arranged in layers, each bending segment is configured to connect two adjacent stacking segments, the first electrode sheet has a first broken seam, and the first broken seam extends in the width direction of the first electrode sheet to break the first electrode sheet. The polarity of the second electrode sheet is opposite to the polarity of the first electrode sheet, and each second electrode sheet is arranged between two adjacent stacking segments in the stacking direction of the plurality of stacking segments.

In such an electrode assembly, the first electrode sheet with the first broken seam is folded to form a stacked structure, the stacked structure has a plurality of bending segments and a plurality of stacking segments, the plurality of stacking segments cooperate with the plurality of second electrode sheets, and the second electrode sheet is located between two adjacent stacking segments, so as to meet the requirement for the number of layers of the electrode assembly. The broken first electrode sheet is reasonably used, thereby reducing the material waste and reducing the manufacturing cost.

The battery cell disclosed in the embodiments of the present application can be used in, but not limited to, electrical apparatuses such as vehicles, ships or aircrafts. A power supply system of the electrical apparatus can be composed of battery cells, batteries, etc. disclosed in the present application, thus being beneficial to alleviate and automatically adjust the deterioration of the expansibility of battery cells, supplement the consumption of the electrolyte solution, improve the stability of the battery performance, and prolong the battery life.

The embodiments of the present application provide an electrical apparatus using a battery as a power supply. The electrical apparatus may be, but is not limited to, mobile phones, tablet personal computers, laptop computers, electric toys, electric tools, electric bicycles, electric motorcycles, electric vehicles, steamships, spacecrafts, etc., wherein the electric toys may include fixed or mobile electric toys, such as game consoles, electric vehicle toys, electric steamship toys and electric airplane toys, and the spacecrafts may include airplanes, rockets, space shuttles, spaceships, etc.

For the convenience of description, the following embodiments will take an electrical apparatus which is a vehicle in an embodiment of the present application as an example for description.

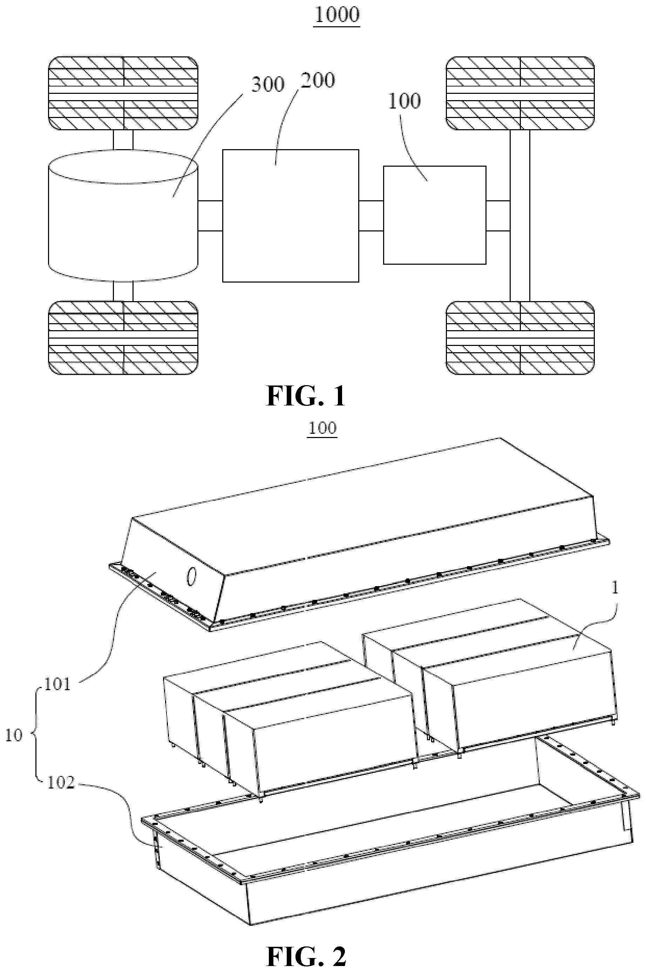

Referring to Fig. 1, Fig. 1 is a schematic structural view of a vehicle 1000 provided in some embodiments of the present application. The vehicle 1000 may be a fuel vehicle, a gas vehicle or a new energy vehicle, and the new energy vehicle may be an all-electric vehicle, a hybrid electric vehicle or an extended-range electric vehicle. A battery 100 is arranged inside the vehicle 1000, and the battery 100 may be arranged at the bottom, head or tail of the vehicle 1000. The battery 100 can be used for the power supply of the vehicle 1000. For example, the battery 100 can be used as an operational power supply of the vehicle 1000 for a circuit system of the vehicle 1000, so as to meet the working power demand for starting, navigation and operation of the vehicle 1000.

The vehicle 1000 may further include a controller 200 and a motor 300. The controller 200 is configured to control the battery 100 to supply power for the motor 300, so as to meet the working power demand for starting, navigation and driving of the vehicle 1000.

In some embodiments of the present application, the battery 100 can not only be used as an operational power supply of the vehicle 1000, but also as a driving power supply of the vehicle 1000, so as to replace or partially replace fuel or natural gas to provide driving power for the vehicle 1000.

Referring to Fig. 2, Fig. 2 is an exploded view of a battery 100 provided in some embodiments of the present application. The battery 100 includes a box body 10 and battery cells 1, and the battery cells 1 are accommodated in the box body 10, wherein the box body 10 is configured to provide an accommodating space for the battery cells 1, and the box body 10 can use various structures. In some embodiments, the box body 10 may include a first part 101 and a second part 102, the first part 101 and the second part 102 cover each other, and the first part 101 and the second part 102 together define the accommodating space for accommodating the battery cells 1. The second part 102 may be a hollow structure with an opening at one end, the first part 101 may be a plate structure, and the first part 101 is covered on the opening side of the second part 102, so that the first part 101 and the second part 102 together define the accommodating space. Both the first part 101 and the second part 102 may be hollow structures with an opening on one side, and the opening side of the first part 101 is covered on the opening side of the second part 102. Of course, the box body 10 formed by the first part 101 and the second part 102 may be of various shapes, such as a cylinder and a cuboid.

In the battery 100, a plurality of battery cells 1 may be provided, and the plurality of battery cells 1 may be connected in series, in parallel or in parallel-series connection. The series and parallel connection refers to both series connection and parallel connection among the plurality of battery cells 1. The plurality of battery cells 1 may be directly connected in series, in parallel or in parallel-series connection, and then, the whole formed by the plurality of battery cells 1 is accommodated in the box body 10. Of course, the battery 100 may also be in the form of a battery module composed of a plurality of battery cells 1 in series, parallel or series and parallel first, and then, a plurality of battery modules 100 are connected in series, parallel or series and parallel to form a whole which is accommodated in the box body 10. The battery 100 may further include other structures. For example, the battery 100 may further include a convergence component for realizing electrical connection between a plurality of battery cells 1.

Each battery cell 1 may be a secondary battery or a primary battery. The battery cell 1 may be cylindrical, flat or cuboid, or may be of other shapes. In the embodiments of the present application, the battery cell 1 which is a cuboid is taken as an example for introduction.

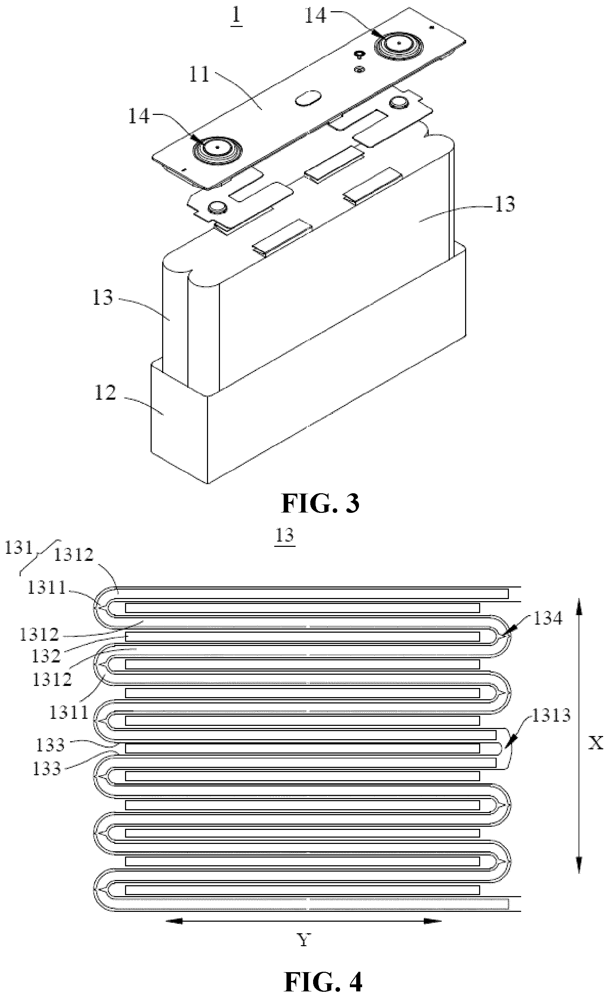

Referring to Fig. 3, Fig. 3 is a schematic view of a breakdown structure of a battery cell 1 provided in some embodiments of the present application. The battery cell 1 refers to the smallest unit for forming the battery 100. As shown in Fig. 3, the battery cell 1 includes an end cover 11, a case 12, electrode assemblies 13 and other functional components.

The end cover 11 refers to a component which is covered at the opening of the case 12 to isolate the internal environment of the battery cell 1 from the external environment. Without limitation, the shape of the end cover 11 may be adapted to the shape of the case 12 to fit the case 12. Functional components such as electrode terminals 14 may be arranged on the end cover 11. The electrode terminals 14 may be electrically connected with the electrode assemblies 13 to output or input the electrical energy of the battery cell 1. In some embodiments, a pressure relief mechanism for releasing the internal pressure when the internal pressure or temperature of the battery cell 1 reaches a threshold may further be arranged on the end cover 11. In some embodiments, an insulator may further be arranged on an inner side of the end cover 11, and the insulator can be configured to isolate the electrically connected components in the case 12 from the end cover 11, so as to reduce the risk of short circuit. Exemplarily, the insulator may be plastic, rubber, etc.

The case 12 is a component for cooperating with the end cover 11 to form the internal environment of the battery cell 1, wherein the formed internal environment can be configured to accommodate the electrode assemblies 13, an electrolyte solution and other components.

The electrode assembly 13 is a component that undergoes an electrochemical reaction in the battery cell 1. The electrode assembly 13 is mainly formed by stacking positive electrode sheets and negative electrode sheets, and a diaphragm is usually arranged between a positive electrode sheet and a negative electrode sheet. The parts with active materials of the positive electrode sheet and the negative electrode sheet constitute a main body part of the electrode assembly 13, and the parts without active materials of the positive electrode sheet and the negative electrode sheet constitute tabs respectively. The positive tab and the negative tab may be located at one end of the main body part together or located at both ends of the main body part respectively. During the charging and discharging of the battery 100, positive electrode active materials and negative electrode active materials react with the electrolyte solution, and the tabs are connected with the electrode terminals 14 to form a current loop.

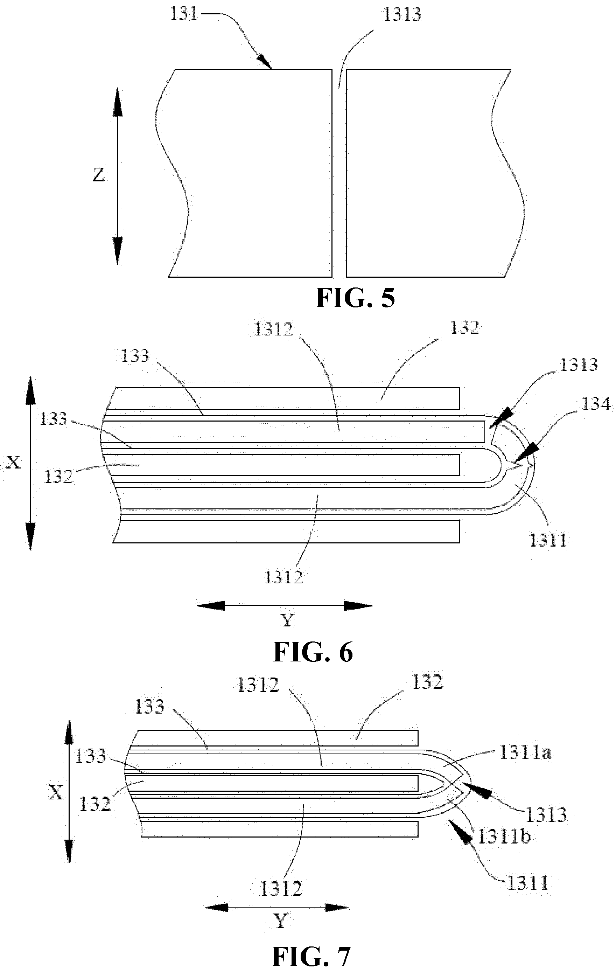

According to some embodiments of the present application, referring to Fig. 4 and Fig. 5, Fig. 4 is a schematic structural view of an electrode assembly 13 provided in some embodiments of the present application, and Fig. 5 is a schematic view of a first broken seam 1313 provided in some embodiments of the present application. The present application provides an electrode assembly 13. As shown in Fig. 4 and Fig. 5, the electrode assembly 13 includes a first electrode sheet 131 and a plurality of second electrode sheets 132. The first electrode sheet 131 includes a plurality of bending segments 1311 and a plurality of stacking segments 1312 arranged in layers, each bending segment 1311 is configured to connect two adjacent stacking segments 1312, the first electrode sheet 131 has a first broken seam 1313, and the first broken seam 1313 extends in the width direction Z of the first electrode sheet 131 to break the first electrode sheet 131. The polarity of the second electrode sheet 132 is opposite to the polarity of the first electrode sheet 131, and each second electrode sheet 132 is arranged between two adjacent stacking segments 1312 in the stacking direction of the plurality of stacking segments 1312.

As shown in Fig. 4, the plurality of stacking segments 1312 are stacked in the X direction, and the X direction may be the thickness direction of the stacking segments 1312 or the thickness direction of the second electrode sheets 132. Two bending segments 1311 connected with the same stacking segment 1312 are oppositely arranged in the Y direction. **In** Fig. 5, the direction shown in Z is the width direction of the first electrode sheet 131. The plurality of bending segments 1311 and the plurality of stacking segments 1312 are formed by folding the first electrode sheet 131. The bending segment 1311 is a corner of the stacked structure formed by bending the first electrode sheet 131, and the stacking segment 1312 is a flat region of the stacked structure.

In the prior art, the first electrode sheet 131 of a stacked electrode assembly is usually a continuous strip structure. In the stacking process, the first electrode sheet 131 is broken after a part of the stacked structure is completed but the number of layers required for the stacked electrode assembly is not reached, resulting in scrapping of the completed stacked part of the electrode assembly 13. According to the electrode assembly 13 provided in the embodiments of the present application, the first electrode sheet 131 with the first broken seam 1313 is folded to form a stacked structure, the stacked structure has a plurality of bending segments 1311 and a plurality of stacking segments 1312, the plurality of stacking segments 1312 cooperate with the plurality of second electrode sheets 132, and the second electrode sheet 132 is located between two adjacent stacking segments 1312, so as to meet the requirement for the number of layers of the electrode assembly 13. The broken first electrode sheet 131 is reasonably used, thereby reducing the material waste and reducing the manufacturing cost.

It should be noted that for the convenience of description, the number of layers of the electrode assembly 13 mentioned in the embodiments of the present application refers to the number of second electrode sheets 132, and each second electrode sheet 132 constitutes a layer of the electrode assembly 13. The number of the stacking segments 1312 is 1 more than that of the second electrode sheets 132, that is, two outer sides of the electrode assembly 13 in the stacking direction of the plurality of stacking segments 1312 are both stacking segments 1312, so that the second electrode sheet 132 is located between two adjacent stacking segments 1312.

Referring to Fig. 6 and Fig. 7, Fig. 6 is a partial view of an electrode assembly 13 provided in some embodiments of the present application, and Fig. 7 is a partial view of an electrode assembly 13 provided in some other embodiments of the present application. According to some embodiments of the present application, as shown in Fig. 6 and Fig. 7, the first broken seam 1313 is arranged at the bending segment 1311.

The first broken seam 1313 is located at the bending segment 1311, may be located at the connecting part of the bending segment 1311 and the stacking segment 1312 (as shown in Fig. 6, that is, the first broken seam 1313 breaks the stacking segment 1312 and the bending segment 1311), or may be located in other regions of the bending segment 1311 (as shown in Fig. 7, that is, the first broken seam 1313 divides the bending segment 1311 into a first sub-bending segment 1311a and a second sub-bending segment 1311b). In the embodiment in which the first broken seam 1313 is located at the connecting part of the bending segment 1311 and the stacking segment 1312, the end of the stacking segment 1312 adjacent to the first broken seam 1313 is exposed to the first broken seam 1313. In the embodiment in which the first broken seam 1313 is located in other regions of the bending segment 1311, the first broken seam 1313 breaks the bending segment 1311 so as to divide the bending segment 1311 into a first sub-bending segment 1311a and a second sub-bending segment 1311b.

It should be noted that the end of the stacking segment 1312 refers to the end of the stacking segment 1312 for connecting the bending segment 1311, that is, the end of the stacking segment 1312 in the Y direction in the figure; and the end of the stacking segment 1312 is exposed to the first broken seam 1313, which means that the first broken seam 1313 breaks the connection between the stacking segment 1312 and the bending segment 1311, and the end of the stacking segment 1312 for connecting the bending segment 1311 is exposed at the first broken seam 1313.

The first broken seam 1313 is located at the bending segment 1311, which can not affect the area of the corresponding region of the stacking segment 1312 and the second electrode sheet 132 in the X direction, so that the stacking segment 1312 and the adjacent second electrode sheet 132 have a larger corresponding to region. In the embodiment of a lithium-ion battery in which the first electrode sheet 131 is a negative electrode sheet and the second electrode sheet 132 is a positive electrode sheet, more lithium intercalation space is ensured, and the occurrence of lithium plating is reduced.

According to some embodiments of the present application, as shown in Fig. 7, the first broken seam 1313 is arranged at the center of the bending segment 1311.

The first broken seam 1313 is located at the center of the bending segment 1311, so that the bending segments 1311 of the parts on both sides of the first broken seam 1313 are symmetrical, that is, the first broken seam 1313 divides the bending segment 1311 into a first sub-bending segment 1311a and a second sub-bending segment 1311b. In the bending direction of the bending segment 1311, the size of the first sub-bending segment 1311a is the same as the size of the second sub-bending segment 1311b, which is convenient for realizing the correspondence between the first sub-bending segment 1311a and the second sub-bending segment 1311b, and convenient for realizing the correspondence between the parts of the first electrode sheet 131 on both sides of the first broken seam 1313.

According to some embodiments of the present application, after the first electrode sheet 131 is unfolded, the width of the first broken seam 1313 is 0.1-2 mm.

The width of the first broken seam 1313 refers to the size of the first broken seam 1313 in the Y direction.

The width range of the first broken seam 1313 is convenient for realizing the coordination between the parts of the first electrode sheet 131 on both sides of the first broken seam 1313, thereby avoiding the interference and misalignment of the parts of the first electrode sheet 131 on both sides of the first broken seam 1313. The width of the first broken seam 1313 should not be too small, and a too small width easily causes the interference of the parts of the first electrode sheet 131 on both sides of the first broken seam 1313. The width of the first broken seam 1313 should not be too large, and a too large width easily reduces the size of the first electrode sheet 131. In a lithium-ion battery, the reduction of the size of the first electrode sheet 131 will affect the lithium intercalation space.

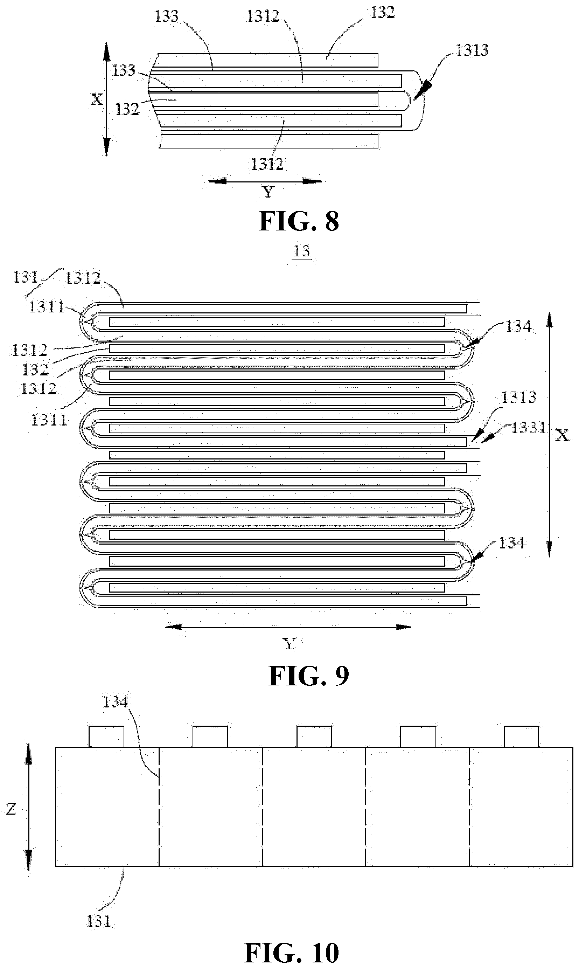

Referring to Fig. 8, Fig. 8 is a partial schematic view of an electrode assembly 13 provided in some other embodiments of the present application. According to some embodiments of the present application, as shown in Fig. 8, the ends of two adjacent stacking segments 1312 in the bending direction of the bending segment 1311 are exposed at the first broken seam 1313.

As shown in Fig. 8, the ends of two adjacent stacking segments 1312 in the bending direction of the bending segment 1311 refer to the ends of two adjacent stacking segments 1312 for connecting the same bending segment 1311, that is, the ends of the stacking segments 1312 in the Y direction in the figure. The ends of two adjacent stacking segments 1312 in the bending direction of the bending segment 1311 are exposed at the first broken seam 1313, which may be that the first broken seam 1313 is located between two adjacent stacking segments 1312, and the first broken seam 1313 is overlapped with the bending segment 1311 in the stacking direction of the plurality of stacking segments 1312, that is, the first broken seam 1313 occupies the space required by the bending segment 1311 originally configured to connect the two adjacent stacking segments 1312, so that the ends of the two adjacent stacking segments 1312 are exposed at the first broken seam 1313.

In other words, the two adjacent stacking segments 1312 are not connected by the same bending segment 1311, and the ends of the two adjacent stacking segments 1312 at the same end in the Y direction are exposed at the first broken seam 1313, thereby being convenient for realizing the stacked alignment of the plurality of stacking segments 1312.

According to some embodiments of the present application, as shown in Fig. 6 to Fig. 8, the electrode assembly 13 further includes two diaphragms 133. The two diaphragms 133 are attached to both sides of the first electrode sheet 131 in the thickness direction, respectively, so as to isolate the first electrode sheet 131 and the second electrode sheet 132, wherein the diaphragm 133 is a continuous strip structure, and the parts of the first electrode sheet 131 on both sides of the first broken seam 1313 are connected by the diaphragm 133.

It should be noted that the diaphragm 133 is attached to the first electrode sheet 131, which means that the diaphragm 133 is attached to the first electrode sheet 131 by means of thermal overlaying, plasma adsorption, electrostatic adsorption, viscose, etc. The second electrode sheet 132 may also be attached to the first electrode sheet 131 by means of thermal overlaying, plasma adsorption, electrostatic adsorption, viscose, etc.

The two diaphragms 133 are attached to both sides of the first electrode sheet 131 in the thickness direction, respectively, which means that the first electrode sheet 131 is located between the two diaphragms 133 and clamped by the two diaphragms 133, so as to isolate the first electrode sheet 131 and the second electrode sheet 132. The diaphragm 133 is a continuous strip structure. The two diaphragms 133 are attached to the first electrode sheet 131 to connect the parts of the first electrode sheet 131 that are broken by the first broken seam 1313 together, thereby avoiding the broken parts from loosening. Furthermore, the two diaphragms 133 are attached to both sides of the first electrode sheet 131 in the thickness direction, respectively to bind the first electrode sheet 131, so that the two parts of the electrode sheet broken at the first broken seam 1313 can be connected to reduce the probability of misalignment of the broken first electrode sheet 131.

Referring to Fig. 9, Fig. 9 is a schematic structural view of an electrode assembly 13 provided in some other embodiments of the present application. According to some embodiments of the present application, as shown in Fig. 9, the electrode assembly 13 further includes two diaphragms 133, and the two diaphragms 133 are attached to both sides of the first electrode sheet 131 in the thickness direction, respectively, so as to isolate the first electrode sheet 131 and the second electrode sheet 132, wherein the diaphragm 133 is provided with a second broken seam 1331, the second broken seam 1331 extends in the width direction of the diaphragm 133 to break the diaphragm 133, and the second broken seam 1331 corresponds to the first broken seam 1313. It should be noted that the width direction of the diaphragm 133 is parallel to the width direction Z of the first electrode sheet 131 (referring to Fig. 5).

As shown in Fig. 9, the two diaphragms 133 are attached to both sides of the first electrode sheet 131 in the thickness direction, respectively, so as to isolate the first electrode sheet 131 and the second electrode sheet 132 to avoid short circuit. By arranging the second broken seam 1331 of the diaphragm 133, the electrode assembly 13 is broken at the first broken seam 1313 and the second broken seam 1331 to form two parts, and the two parts of the electrode assembly 13 form two independent stacked structures. The parts of electrode assemblies 13 with different layers are reasonably combined to meet the requirement for the number of layers of the electrode assemblies 13, thereby saving materials, and avoiding the waste of the parts of the electrode assemblies 13 that do not meet the requirement for the number of layers.

According to some embodiments of the present application, the first electrode sheet 131 is a negative electrode sheet, and the second electrode sheet 132 is a positive electrode sheet.

In a lithium-ion battery, due to the lack of the lithium intercalation space, lithium plating is easy to occur. In this solution, since the second electrode sheet 132 is located between two adjacent stacking segments 1312 of the first electrode sheet 131, and the end of the stacking segment 1312 is connected with the bending segment 1311, so that the length of the first electrode sheet 131 is greater than the length of the second electrode sheet 132, so as to provide more lithium intercalation space and reduce the occurrence of lithium plating.

According to some embodiments of the present application, as shown in Fig. 4 to Fig. 9, in the stacking direction of the plurality of stacking segments 1312, the projection of each stacking segment 1312 completely covers the projection of each second electrode sheet 132, and the area of the projection of the stacking segment 1312 is greater than the area of the projection of the second electrode sheet 132.

As shown in Fig. 4 to Fig. 9, on a plane perpendicular to the stacking direction of the plurality of stacking segments 1312, that is, on a plane perpendicular to the X direction, the projections of all second electrode sheets 132 are overlapped, the projection of each stacking segment 1312 completely covers the projection of each second electrode sheet 132, and the area of the projection of the stacking segment 1312 is greater than the area of the projection of the second electrode sheet 132. Conversely, the projection of the second electrode sheet 132 is located inside the projection of the stacking segment 1312.

In the embodiment of a lithium-ion battery, the area of the stacking segment 1312 is greater than the area of the second electrode sheet 132. In the embodiment in which the first electrode sheet 131 is a negative electrode sheet and the second electrode sheet 132 is a positive electrode sheet, the stacking segment 1312 has more lithium intercalation space, and the occurrence of lithium plating can be effectively reduced.

According to some embodiments of the present application, as shown in Fig. 4 to Fig. 9, the bending segment 1311 is provided with a guide part 134, and the guide part 134 is configured to guide the bending segment 1311 to bend. By arranging the guide part 134, the difficulty in bending the first electrode sheet 131 can be reduced.

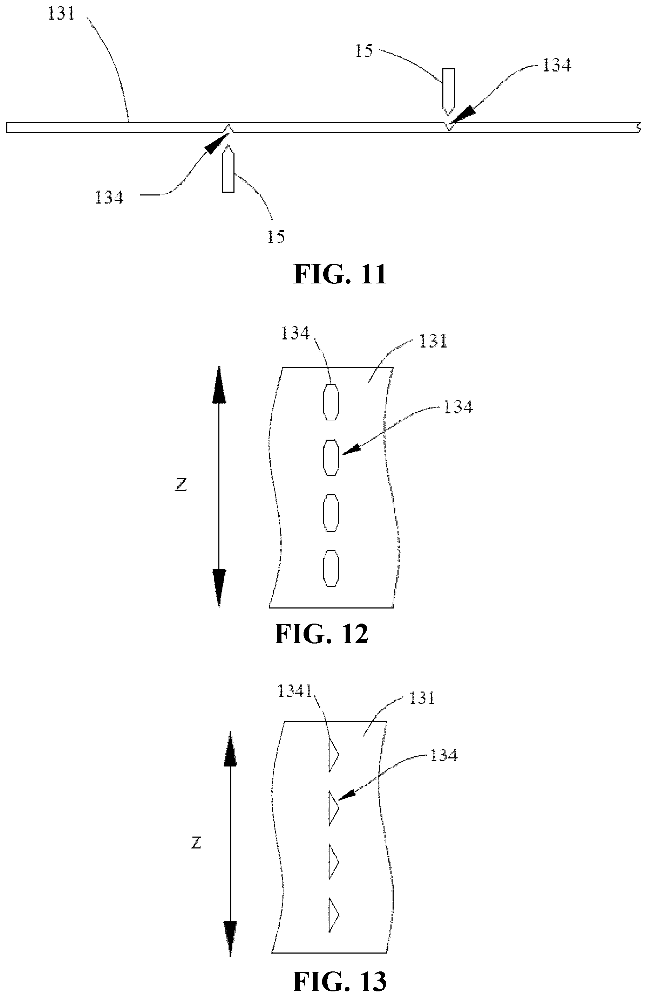

Referring to Fig. 10 and Fig. 11, Fig. 10 is a top view of a first electrode sheet 131 before bending provided in some embodiments of the present application, and Fig. 11 is a schematic view of a guide part 134 before bending of a first electrode sheet 131 provided in some embodiments of the present application. As shown in Fig. 10 and Fig. 11, the guide part 134 may be a line crease formed by a pre-creasing knife 15 acting on the first electrode sheet 131. The pre-creasing knife 15 may be a metal cutter, a laser cutter, a dust gun, an ion beam or other tools or devices that can make the first electrode sheet 131 form a line crease. In the process of making the first electrode sheet 131 form the guide part 134, two pre-creasing knives 15 can be used for completing the guide parts 134 on both sides of the first electrode sheet 131 in the thickness direction, or one pre-creasing knife 15 can be used for forming the guide part 134 on one side of the first electrode sheet 131.

According to some embodiments of the present application, the guide part 134 extends in the width direction Z of the first electrode sheet 131.

Referring to Fig. 12 and Fig. 13, Fig. 12 is a schematic structural view of a guide part 134 provided in some embodiments of the present application, and Fig. 13 is a schematic structural view of a guide part 134 provided in some other embodiments of the present application. According to some embodiments of the present application, as shown in Fig. 12 and Fig. 13, the guide part 134 includes a plurality of grooves 1341 which are arranged at intervals in the width direction Z of the first electrode sheet 131.

The guide part 134 may pierce the first electrode sheet 131 or remove the coating on the surface of the first electrode sheet 131, as long as the first electrode sheet 131 can be conveniently folded.

In the embodiment in which the groove 1341 is formed by piercing the first electrode sheet 131, as shown in Fig. 12 and Fig. 13, the groove 1341 may be rectangular or triangular, or may be of other shapes. The shape of the groove 1341 is determined based on different cutters. For example, the first electrode sheet 131 can be punched by a rectangular cutter to form a rectangular groove 1341, and the first electrode sheet 131 can be pierced by a triangular cutter to form a triangular groove 1341.

In some embodiments, the width of the rectangular cutter is 0.1-1 mm, and the length of the rectangular cutter is 3-50 mm; and the length of the bottom edge of the triangular cutter is 3-30 mm, and the size of the widest part of the triangular cutter is 0.2-1 mm.

In the width direction Z of the first electrode sheet 131, the sum of the sizes of the plurality of grooves 1341 accounts for 50-80% of the width of the first electrode sheet 131. If the proportion of the groove 1341 is too small, the first electrode sheet 131 cannot be folded or will form an arc when being folded. If the proportion of the groove 1341 is too large, the first electrode sheet 131 is easy to tear along the groove 1341 under the action of tension.

The groove 1341 penetrating through the first electrode sheet 131 may also be punched by a laser, a dust gun, an ion beam, etc. The width of the punched hole is 0.1-1 mm, and the length of the punched hole is 2-100 mm.

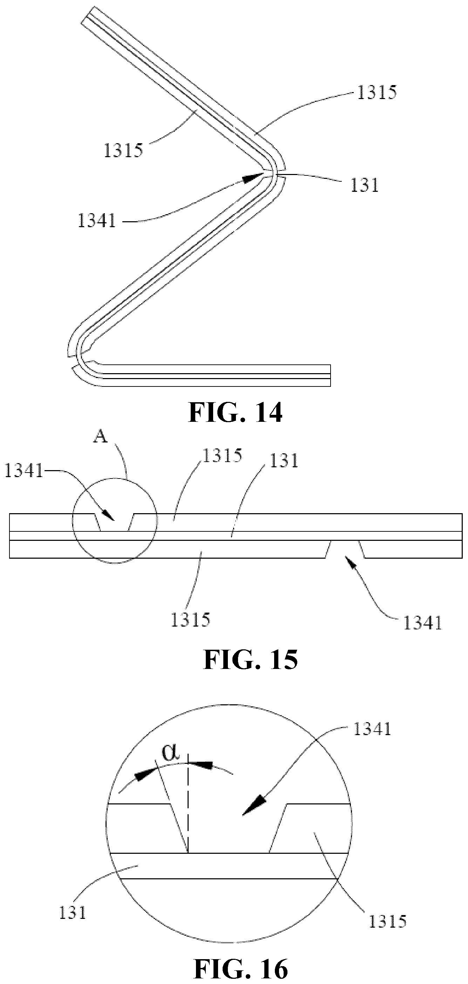

Referring to Fig. 14 and Fig. 15, Fig. 14 is a schematic structural view of a groove 1341 provided in some embodiments of the present application, and Fig. 15 is a schematic structural view of a groove 1341 provided in some other embodiments of the present application. In the embodiment in which the groove 1341 is formed by removing a coating 1315 on the surface of the first electrode sheet 131, the groove 1341 may be formed by cleaning the coating 1315, and the coating 1315 may be cleaned by means of a laser, a dust gun, an ion beam, etc. The cleaning depth of the groove 1341 is 50-120% of the thickness of the single-sided coating 1315, and the cleaning width is 0.1-1 mm.

In the embodiment in which the groove 1341 is formed by cleaning the coating 1315, as shown in Fig. 14 and Fig. 15, the grooves 1341 may be formed by cleaning the coating 1315 symmetrically on both sides of the first electrode sheet 131 in the thickness direction, or the grooves 1341 may also be staggered.

In some embodiments, as shown in Fig. 15, the cross section of the groove 1341 may be of a trapezoid with a wide outside and a narrow inside. For example, referring to Fig. 16, Fig. 16 is an enlarged view of a part A in Fig. 15. In Fig. 16, an included angle α between a side surface of the groove 1341 and the depth direction of the groove 1341 is 0-60°.

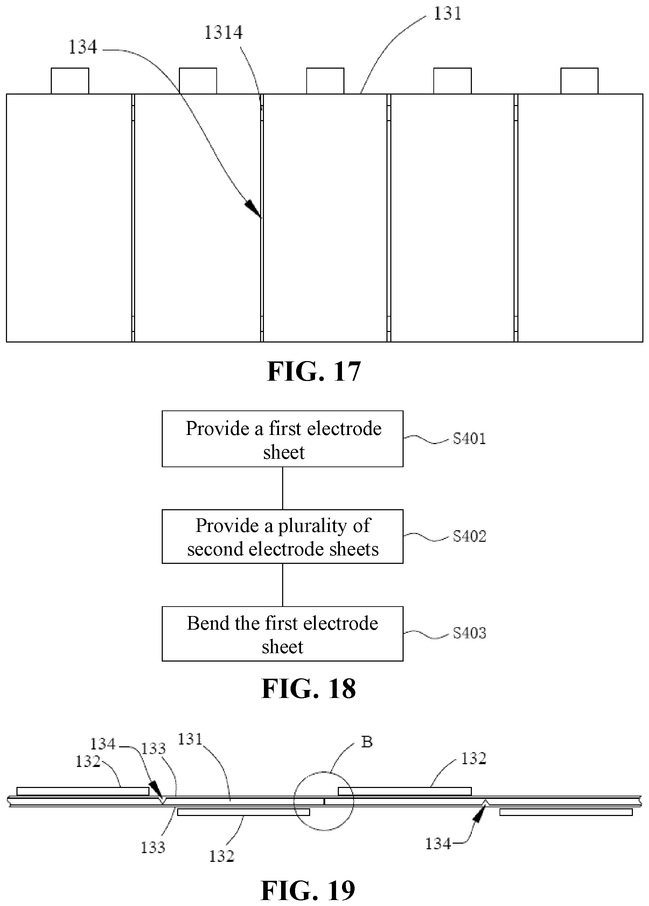

Referring to Fig. 17, Fig. 17 is a top view of a first electrode sheet 131 before bending provided in some other embodiments of the present application. In order to facilitate the detection of the relative positions of the second electrode sheet 132 and the first electrode sheet 131, as shown in Fig. 17, the first electrode sheet 131 may be provided with one or more sections of punched regions, namely mark holes 1314, wherein the width of the mark hole 1314 is 0.1-1 mm, and the length of the mark hole 1314 is 3-100 mm.

According to some embodiments of the present application, the present application further provides a battery cell 1, including the electrode assembly 13 described in any one of the above solutions.

According to some embodiments of the present application, the present application further provides a battery 100, including the battery cell 1 described in any one of the above solutions.

According to some embodiments of the present application, the present application further provides an electrical device, including the battery cell 1 described in any one of the above solutions, and the battery cell 1 is configured to provide electrical energy for the electrical device.

The electrical device may be any one of the above-mentioned devices or systems using the battery 100.

According to some embodiments of the present application, referring to Fig. 4, the present application provides an electrode assembly 13. The electrode assembly 13 includes a first electrode sheet 131, a plurality of second electrode sheets 132 and two diaphragms 133. The first electrode sheet 131 includes a plurality of bending segments 1311 and a plurality of stacking segments 1312 arranged in layers, and each bending segment 1311 is configured to connect two adjacent stacking segments 1312. The first electrode sheet 131 has a first broken seam 1313, and the first broken seam 1313 extends in the width direction Z of the first electrode sheet 131 (referring to Fig. 5) to break the first electrode sheet 131. The ends of two adjacent stacking segments 1312 in the bending direction of the bending segment 1311 are exposed at the first broken seam, that is, the ends of two adjacent stacking segments 1312 in the Y direction are exposed at the first broken seam 1313. The two diaphragms 133 are attached to both sides of the first electrode sheet 131 in the thickness direction, respectively, so as to isolate the first electrode sheet 131 and the second electrode sheet 132. The diaphragm 133 is a continuous strip structure, and the parts of the first electrode sheet 131 on both sides of the first broken seam 1313 are connected by the diaphragm 133. The polarity of the second electrode sheet 132 is opposite to the polarity of the first electrode sheet 131, and each second electrode sheet 132 is arranged between two adjacent stacking segments 1312 in the stacking direction of the plurality of stacking segments 1312. The first electrode sheet 131 is a negative electrode sheet, and the second electrode sheet 132 is a positive electrode sheet. The parts of the first electrode sheet 131 on both sides of the first broken seam 1313 are connected by the two diaphragms 133, the first electrode sheet 131 with the first broken seam is folded to form a stacked structure, and a plurality of stacking segments 1312 cooperate with a plurality of second electrode sheets 132 to meet the requirement for the number of layers of the electrode assembly 13. The broken first electrode sheet 131 is reasonably used, thereby reducing the material waste and reducing the manufacturing cost.

Referring to Fig. 18, Fig. 18 is a schematic flow chart of a method for manufacturing an electrode assembly 13 provided in some embodiments of the present application. According to some embodiments of the present application, the present application further provides a method for manufacturing an electrode assembly 13, as shown in Fig. 18. The method for manufacturing an electrode assembly 13 includes:

S401: a first electrode sheet 131 is provided, the first electrode sheet 131 has a first broken seam 1313, and the first broken seam 1313 extends in the width direction Z of the first electrode sheet 131 to break the first electrode sheet 131;

S402: a plurality of second electrode sheets 132 are provided, and the polarity of the second electrode sheet 132 is opposite to the polarity of the first electrode sheet 131; and

S403: the first electrode sheet 131 is bent to form a plurality of bending segments 1311 and a plurality of stacking segments 1312, each bending segment 1311 is connected with two adjacent stacking segments 1312, and each second electrode sheet 132 is arranged between two adjacent stacking segments 1312 in the stacking direction of the plurality of stacking segments 1312.

According to the method for manufacturing an electrode assembly 13 in the embodiments of the present application, the first electrode sheet 131 with the first broken seam 1313 is bent to form a stacked structure to meet the requirement for the number of layers of the electrode assembly 13, and the broken first electrode sheet 131 is reasonably used, thereby reducing the material waste and reducing the manufacturing cost.

The first electrode sheet 131 has the first broken seam 1313, so that the first electrode sheet 131 has at least two independent parts, and all broken parts cooperate with the corresponding second electrode sheets 132 to form a stacked electrode assembly 13 meeting the requirement for the number of layers.

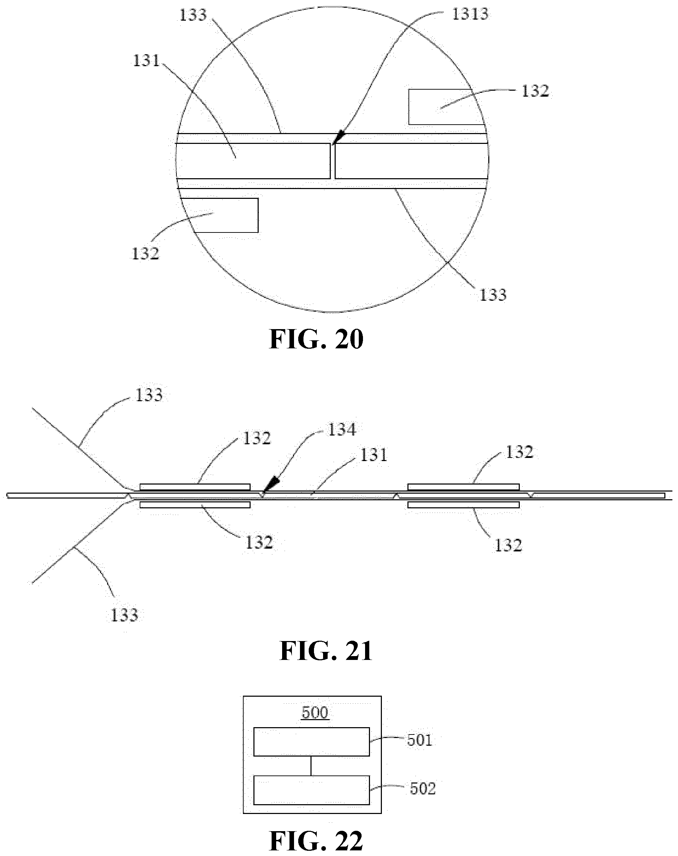

Referring to Fig. 19 and Fig. 20, Fig. 19 is a schematic structural view of a first electrode sheet 131 before bending provided in some embodiments of the present application, and Fig. 20 is an enlarged view of a part B in Fig. 19. According to some embodiments of the present application, the method for manufacturing an electrode assembly 13 further includes: as shown in Fig. 19 and Fig. 20, two diaphragms 133 are provided, and the diaphragm 133 is a continuous strip structure, wherein before the first electrode sheet 131 is bent, the two diaphragms 133 are attached to both sides of the first electrode sheet 131 in the thickness direction, respectively, and a plurality of second electrode sheets 132 are attached to the side of the diaphragm 133 away from the first electrode sheet 131.

The two diaphragms 133 are attached to both sides of the first electrode sheet 131 in the thickness direction, respectively, so as to connect the parts of the first electrode sheet 131 on both sides of the first broken seam 1313 to form a whole, thereby avoiding the misalignment of the broken part. The plurality of second electrode sheets 132 are attached to the side of the diaphragm 133 away from the first electrode sheet 131, which means that the first electrode sheet 131 is isolated from the second electrode sheet 132 by the diaphragm 133.

Before the first electrode sheet 131 is bent, the plurality of second electrode sheets 132 may be arranged in such a way that the projections of two adjacent second electrode sheets 132 on the first electrode sheet 131 are staggered in the thickness direction of the first electrode sheet 131, or the plurality of second electrode sheets 132 may also be arranged in such a way that the projections of two adjacent second electrode sheets 132 on the first electrode sheet 131 are overlapped in the thickness direction of the first electrode sheet 131. Any one of the above solutions only needs to ensure that the second electrode sheet 132 of the formed stacked electrode assembly 13 is located between two adjacent stacking segments 1312.

The two broken parts of the first electrode sheet 131 are connected by the two diaphragms 133 to meet the requirement for the number of layers of the whole electrode assembly, and the broken first electrode sheets 131 with different lengths are reasonably used, thereby reducing the material waste.

In addition, in the stacking process, if the supplied materials of the first electrode sheet 131 have defects, scrap segments can be eliminated to ensure the quality of the electrode assembly 13. The first broken seam 1313 is formed in the broken position of the first electrode sheet 131, and the broken first electrode sheets 131 are connected together by the two diaphragms 133. The diaphragm 133 is a continuous strip structure, and the two diaphragms 133 are attached to both sides of the first electrode sheet 131 in the thickness direction, so as to avoid scrapping of the strip of an uncompleted electrode assembly 13 after scraps are removed due to the defects of the supplied materials, thereby improving the utilization ratio of the first electrode sheet 131 and the second electrode sheet 132.

Referring to Fig. 21, Fig. 21 is a schematic assembly view of second electrode sheets 132 and a first electrode sheet 131 provided in some embodiments of the present application. According to some embodiments of the present application, in the step of attaching the plurality of second electrode sheets 132 to the side of the diaphragm 133 away from the first electrode sheet 131, the plurality of second electrode sheets 132 are symmetrically attached to both sides of the first electrode sheet 131.

The plurality of second electrode sheets 132 are symmetrically attached to both sides of the first electrode sheet 131, which means that, as shown in Fig. 21, the second electrode sheets 132 on both sides of the first electrode sheet 131 in the thickness direction are symmetrically distributed, that is, the projections of two adjacent second electrode sheets 132 on the first electrode sheet 131 are overlapped in the thickness direction of the first electrode sheet 131. When the second electrode sheets 132 are overlaid with the first electrode sheet 131, two second electrode sheets 132 are symmetrically arranged on both sides of the first electrode sheet 131 in the thickness direction, and the two second electrode sheets 132 and two diaphragms 133 are overlaid with the first electrode sheet 131, so as to make the diaphragm 133 be located between the first electrode sheet 131 and the second electrode sheet 132.

The plurality of second electrode sheets 132 are symmetrically attached to both sides of the first electrode sheet 131, thereby facilitating the stacking operation of the second electrode sheets 132, and improving the stacking efficiency.

Referring to Fig. 22, Fig. 22 is a schematic block diagram of a device 500 for manufacturing an electrode assembly provided in some embodiments of the present application. According to some embodiments of the present application, as shown in Fig. 22, the present application further provides a device 500 for manufacturing an electrode assembly. The device 500 for manufacturing an electrode assembly includes a provision module 501 and an assembling module 502. The provision module 501 is configured to provide a first electrode sheet 131 and provide a plurality of second electrode sheets 132, the first electrode sheet 131 has a first broken seam 1313, the first broken seam 1313 extends in the width direction Z of the first electrode sheet 131 to break the first electrode sheet 131, and the polarity of the second electrode sheet 132 is opposite to the polarity of the first electrode sheet 131. The assembling module 502 is configured to bend the first electrode sheet 131 to form a plurality of bending segments 1311 and a plurality of stacking segments 1312 arranged in layers, each bending segment 1311 is configured to connect two adjacent stacking segments 1312, and each second electrode sheet 132 is arranged between two adjacent stacking segments 1312 in the stacking direction of the plurality of stacking segments 1312.

The present application is not limited to the specific embodiments disclosed herein, but includes all technical solutions falling within the scope of claims.

## Claims

1. An electrode assembly (13), comprising:
a first electrode sheet (131), comprising a plurality of bending segments (1311) and a plurality of stacking segments (1312) arranged in layers, wherein each of the bending segments (1311) is configured to connect two adjacent stacking segments (1312), the first electrode sheet (131) has a first broken seam (1313), and the first broken seam (1313) extends in the width direction of the first electrode sheet (131) to break the first electrode sheet (131) into two separate parts;
a plurality of second electrode sheets (132), wherein the polarity of the second electrode sheet (132) is opposite to the polarity of the first electrode sheet (131), and each of the second electrode sheets (132) is arranged between two adjacent stacking segments (1312) in the stacking direction of the plurality of stacking segments (1312); and
wherein the electrode assembly (13) further comprises:
two diaphragms (133) attached to both sides of the first electrode sheet (131) in the thickness direction, respectively, to isolate the first electrode sheet (131) and the second electrode sheet (132),
wherein each diaphragm (133) is a continuous strip structure, and the two separate parts of the first electrode sheet (131) on both sides of the first broken seam (1313) are connected by the diaphragms (133).

2. The electrode assembly (13) according to claim 1, wherein the first broken seam (1313) is arranged at the bending segment (1311).

3. The electrode assembly (13) according to claim 2, wherein the first broken seam (1313) is arranged at the center of the bending segment (1311).

4. The electrode assembly (13) according to any one of claims 1 to 3, wherein after the first electrode sheet (131) is unfolded, the width of the first broken seam (1313) is 0.1-2 mm.

5. The electrode assembly (13) according to any one of claims 1 to 4, wherein the ends of two adjacent stacking segments (1312) in the bending direction of the bending segment (1311) are exposed at the first broken seam (1313).

6. The electrode assembly (13) according to any one of claims 1 to 5, wherein the first electrode sheet (131) is a negative electrode sheet, and the second electrode sheet (132) is a positive electrode sheet
preferably, wherein in the stacking direction of the plurality of stacking segments (1312), the projection of each of the stacking segments (1312) completely covers the projection of each of the second electrode sheets (132), and the area of the projection of the stacking segment (1312) is greater than the area of the projection of the second electrode sheet (132).

7. A battery cell (1), comprising the electrode assembly (13) according to any one of claims 1 to 6.

8. A battery (100), comprising the battery cell (1) according to claim 7.

9. An electrical device, comprising the battery cell (1) according to claim 7, wherein the battery cell (1) is configured to provide electrical energy.

10. A method for manufacturing an electrode assembly (13), comprising:
providing a first electrode sheet (131), the first electrode sheet (131) having a first broken seam (1313), and the first broken seam (1313) extending in the width direction of the first electrode sheet (131) to break the first electrode sheet (131) into two separate parts;
providing a plurality of second electrode sheets (132), the polarity of the second electrode sheet (132) being opposite to the polarity of the first electrode sheet (131); and
bending the first electrode sheet (131) to form a plurality of bending segments (1311) and a plurality of stacking segments (1312), each of the bending segments (1311) connecting two adjacent stacking segments (1312), and each of the second electrode sheets (132) being arranged between two adjacent stacking segments (1312) in the stacking direction of the plurality of stacking segments (1312);
wherein the electrode assembly (13) further comprises:
two diaphragms (133) attached to both sides of the first electrode sheet (131) in the thickness direction, respectively, to isolate the first electrode sheet (131) and the second electrode sheet (132),
wherein each diaphragm (133) is a continuous strip structure, and the two separate parts of the first electrode sheet (131) on both sides of the first broken seam (1313) are connected by the diaphragms (133).

11. The method for manufacturing an electrode assembly (13) according to claim 10, wherein the method for manufacturing an electrode assembly (13) further comprises:
providing two diaphragms (133), each diaphragm (133) being a continuous strip structure,
wherein before the first electrode sheet (131) is bent, the two diaphragms (133) are attached to both sides of the first electrode sheet (131) in the thickness direction, respectively, and the plurality of second electrode sheets (132) are attached to the side of each diaphragm (133) away from the first electrode sheet (131).

12. The method for manufacturing an electrode assembly (13) according to claim 11, wherein in the step of attaching the plurality of second electrode sheets (132) to the side of each diaphragm (133) away from the first electrode sheet (131), the plurality of second electrode sheets (132) are symmetrically attached to both sides of the first electrode sheet (131).

13. A device for manufacturing an electrode assembly (13), comprising: a provision module (501) configured to provide a first electrode sheet (131) and provide a plurality of second electrode sheets (132), wherein the first electrode sheet (131) has a first broken seam (1313), the first broken seam (1313) extends in the width direction of the first electrode sheet (131) to break the first electrode sheet (131) into two separate parts, and the polarity of the second electrode sheet (132) is opposite to the polarity of the first electrode sheet (131); and
an assembling module (502) configured to bend the first electrode sheet (131) to form a plurality of bending segments (1311) and a plurality of stacking segments (1312) arranged in layers, wherein each of the bending segments (1311) is configured to connect two adjacent stacking segments (1312), and each of the second electrode sheets (132) is arranged between two adjacent stacking segments (1312) in the stacking direction of the plurality of stacking segments (1312);
wherein the electrode assembly (13) further comprises:
two diaphragms (133) attached to both sides of the first electrode sheet (131) in the thickness direction, respectively, to isolate the first electrode sheet (131) and the second electrode sheet (132),
wherein each diaphragm (133) is a continuous strip structure, and the two separate parts of the first electrode sheet (131) on both sides of the first broken seam (1313) are connected by the diaphragms (133).

## Patentansprüche

1. Elektrodenanordnung (13), umfassend:
eine erste Elektrodenplatte (131), umfassend eine Vielzahl von Biegesegmenten (1311) und eine Vielzahl von Stapelsegmenten (1312), die in Schichten angeordnet sind, wobei jedes der Biegesegmente (1311) konfiguriert ist, um zwei angrenzende Stapelsegmente (1312) zu verbinden, die erste Elektrodenplatte (131) eine erste Trennnaht (1313) aufweist, und die erste Trennnaht (1313) sich in der Breitenrichtung der ersten Elektrodenplatte (131) erstreckt, um die erste Elektrodenplatte (131) in zwei separate Teile zu trennen;
eine Vielzahl von zweiten Elektrodenplatten (132), wobei die Polarität der zweiten Elektrodenplatte (132) der Polarität der ersten Elektrodenplatte (131) entgegengesetzt ist, und jede der zweiten Elektrodenplatten (132) zwischen zwei angrenzenden Stapelsegmenten (1312) in der Stapelrichtung der Vielzahl von Stapelsegmenten (1312) angeordnet ist; und
wobei die Elektrodenanordnung (13) ferner umfasst:
zwei Diaphragmen (133), die an beiden Seiten der ersten Elektrodenplatte (131) in der Dickenrichtung angebracht sind, um die erste Elektrodenplatte (131) und die zweite Elektrodenplatte (132) zu isolieren,
wobei jedes Diaphragma (133) eine kontinuierliche Streifenstruktur ist, und die beiden separaten Teile der ersten Elektrodenplatte (131) auf beiden Seiten der ersten Trennnaht (1313) durch die Diaphragmen (133) verbunden sind.

2. Elektrodenanordnung (13) nach Anspruch 1, wobei die erste Trennnaht (1313) an dem Biegesegment (1311) angeordnet ist.

3. Elektrodenanordnung (13) nach Anspruch 2, wobei die erste Trennnaht (1313) in der Mitte des Biegesegments (1311) angeordnet ist.

4. Elektrodenanordnung (13) nach einem der Ansprüche 1 bis 3, wobei, nachdem die erste Elektrodenplatte (131) aufgefaltet wird, die Breite der ersten Trennnaht (1313) 0,1 bis 2 mm beträgt.

5. Elektrodenanordnung (13) nach einem der Ansprüche 1 bis 4, wobei die Enden von zwei angrenzenden Stapelsegmenten (1312) in der Biegerichtung des Biegesegments (1311) an der ersten Trennnaht (1313) freiliegen.

6. Elektrodenanordnung (13) nach einem der Ansprüche 1 bis 5, wobei die erste Elektrodenplatte (131) eine negative Elektrodenplatte ist und die zweite Elektrodenplatte (132) eine positive Elektrodenplatte ist
vorzugsweise, wobei in der Stapelrichtung der Vielzahl von Stapelsegmenten (1312) der Vorsprung jedes der Stapelsegmente (1312) den Vorsprung jeder der zweiten Elektrodenplatten (132) vollständig abdeckt und die Fläche des Vorsprungs des Stapelsegments (1312) größer ist als die Fläche des Vorsprungs der zweiten Elektrodenplatte (132).

7. Batteriezelle (1), umfassend die Elektrodenanordnung (13) nach einem der Ansprüche 1 bis 6.

8. Batterie (100), umfassend die Batteriezelle (1) nach Anspruch 7.

9. Elektrische Vorrichtung, umfassend die Batteriezelle (1) nach Anspruch 7, wobei die Batteriezelle (1) konfiguriert ist, um elektrische Energie bereitzustellen.

10. Verfahren zum Herstellen einer Elektrodenanordnung (13), umfassend:
Bereitstellen einer ersten Elektrodenplatte (131), wobei die erste Elektrodenplatte (131) eine erste Trennnaht (1313) aufweist und die erste Trennnaht (1313) sich in der Breitenrichtung der ersten Elektrodenplatte (131) erstreckt, um die erste Elektrodenplatte (131) in zwei separate Teile zu trennen;
Bereitstellen einer Vielzahl von zweiten Elektrodenplatten (132), wobei die Polarität der zweiten Elektrodenplatte (132) der Polarität der ersten Elektrodenplatte (131) entgegengesetzt ist; und
Biegen der ersten Elektrodenplatte (131), um eine Vielzahl von Biegesegmenten (1311) und eine Vielzahl von Stapelsegmenten (1312) zu bilden, wobei jedes der Biegesegmente (1311) zwei angrenzende Stapelsegmente (1312) verbindet und jede der zweiten Elektrodenplatten (132) zwischen zwei angrenzenden Stapelsegmenten (1312) in der Stapelrichtung der Vielzahl von Stapelsegmenten (1312) angeordnet ist;
wobei die Elektrodenanordnung (13) ferner umfasst:
zwei Diaphragmen (133), die an beiden Seiten der ersten Elektrodenplatte (131) in der Dickenrichtung angebracht sind, um die erste Elektrodenplatte (131) und die zweite Elektrodenplatte (132) zu isolieren,
wobei jedes Diaphragma (133) eine kontinuierliche Streifenstruktur ist, und die beiden separaten Teile der ersten Elektrodenplatte (131) auf beiden Seiten der ersten Trennnaht (1313) durch die Diaphragmen (133) verbunden sind.

11. Verfahren zum Herstellen einer Elektrodenanordnung (13) nach Anspruch 10,
wobei das Verfahren zum Herstellen einer Elektrodenanordnung (13) ferner umfasst:
Bereitstellen von zwei Diaphragmen (133), wobei jedes Diaphragma (133) eine kontinuierliche Streifenstruktur ist,
wobei, bevor die erste Elektrodenplatte (131) gebogen wird, die beiden Diaphragmen (133) an beiden Seiten der ersten Elektrodenplatte (131) jeweils in der Dickenrichtung angebracht werden und die Vielzahl von zweiten Elektrodenplatten (132) an der von der ersten Elektrodenplatte (131) abgewandten Seite jedes Diaphragmas (133) angebracht werden.

12. Verfahren zum Herstellen einer Elektrodenanordnung (13) nach Anspruch 11,
wobei in dem Schritt des Anbringens der Vielzahl von zweiten Elektrodenplatten (132) an der von der ersten Elektrodenplatte (131) abgewandten Seite jedes Diaphragmas (133) die Vielzahl von zweiten Elektrodenplatten (132) symmetrisch an beiden Seiten der ersten Elektrodenplatte (131) angebracht werden.

13. Vorrichtung zum Herstellung einer Elektrodenanordnung (13), umfassend: ein Bereitstellungsmodul (501), das konfiguriert ist, um eine erste Elektrodenplatte (131) bereitzustellen und eine Vielzahl von zweiten Elektrodenplatten (132) bereitzustellen, wobei die erste Elektrodenplatte (131) eine erste Trennnaht (1313) aufweist, die erste Trennnaht (1313) sich in der Breitenrichtung der ersten Elektrodenplatte (131) erstreckt, um die erste Elektrodenplatte (131) in zwei separate Teile zu trennen, und die Polarität der zweiten Elektrodenplatte (132) entgegengesetzt zur Polarität der ersten Elektrodenplatte (131) ist; und
ein Zusammenbaumodul (502), das konfiguriert ist, um die erste Elektrodenplatte (131) zu biegen, um eine Vielzahl von Biegesegmenten (1311) und eine Vielzahl von Stapelsegmenten (1312) zu bilden, die in Schichten angeordnet sind, wobei jedes der Biegesegmente (1311) konfiguriert ist, um zwei angrenzende Stapelsegmente (1312) zu verbinden, und jede der zweiten Elektrodenplatten (132) zwischen zwei angrenzenden Stapelsegmenten (1312) in der Stapelrichtung der Vielzahl von Stapelsegmenten (1312) angeordnet ist;
wobei die Elektrodenanordnung (13) ferner umfasst:
zwei Diaphragmen (133), die an beiden Seiten der ersten Elektrodenplatte (131) in der Dickenrichtung angebracht sind, um die erste Elektrodenplatte (131) und die zweite Elektrodenplatte (132) zu isolieren,
wobei jedes Diaphragma (133) eine kontinuierliche Streifenstruktur ist, und die beiden separaten Teile der ersten Elektrodenplatte (131) auf beiden Seiten der ersten Trennnaht (1313) durch die Diaphragmen (133) verbunden sind.

## Revendications

1. Ensemble électrode (13), comprenant :
une première feuille d'électrode (131), comprenant une pluralité de segments de flexion (1311) et une pluralité de segments d'empilage (1312) disposés en couches, dans lequel chacun des segments de flexion (1311) est configuré pour connecter deux segments d'empilage adjacents (1312), la première feuille d'électrode (131) présente une première jointure cassée (1313), et la première jointure cassée (1313) s'étend dans la direction de largeur de la première feuille d'électrode (131) pour casser la première feuille d'électrode (131) en deux parties séparées ;
une pluralité de secondes feuilles d'électrode (132), dans lequel la polarité de la seconde feuille d'électrode (132) est opposée à celle de la première feuille d'électrode (131), et chacune des secondes feuilles d'électrode (132) est disposée entre deux segments d'empilage adjacents (1312) dans la direction d'empilage de la pluralité de segments d'empilage (1312) ; et
dans lequel l'ensemble électrode (13) comprend en outre :
deux membranes (133) fixées sur les deux côtés de la première feuille d'électrode (131) dans la direction d'épaisseur, respectivement, pour isoler la première feuille d'électrode (131) et la seconde feuille d'électrode (132),
dans lequel chaque membrane (133) est une structure en bande continue, et les deux parties séparées de la première feuille d'électrode (131) sur les deux côtés de la première jointure cassée (1313) sont connectées par les membranes (133).

2. Ensemble électrode (13) selon la revendication 1, dans lequel la première joncture cassée (1313) est disposée au niveau du segment de flexion (1311).

3. Ensemble électrode (13) selon la revendication 2, dans lequel la première jointure cassée (1313) est disposée au centre du segment de flexion (1311).

4. Ensemble électrode (13) selon l'une quelconque des revendications 1 à 3, dans lequel après le dépliement de la première feuille d'électrode (131), la largeur de la première jointure cassée (1313) est de 0,1 à 2 mm.

5. Ensemble électrode (13) selon l'une quelconque des revendications 1 à 4, dans lequel les extrémités de deux segments d'empilage adjacents (1312) dans la direction de flexion du segment de flexion (1311) sont exposées au niveau de la première jointure cassée (1313).

6. Ensemble électrode (13) selon l'une quelconque des revendications 1 à 5, dans lequel la première feuille d'électrode (131) est une feuille d'électrode négative, et la seconde feuille d'électrode (132) est une feuille d'électrode positive,
de préférence, dans lequel dans la direction d'empilage de la pluralité de segments d'empilage (1312), la projection de chacun des segments d'empilage (1312) couvre entièrement la projection de chacune des secondes feuilles d'électrode (132), et la surface de projection du segment d'empilage (1312) est supérieure à la surface de projection de la seconde feuille d'électrode (132).

7. Élément de batterie (1), comprenant l'ensemble électrode (13) selon l'une quelconque des revendications 1 à 6.

8. Batterie (100), comprenant l'élément de batterie (1) selon la revendication 7.

9. Dispositif électrique, comprenant l'élément de batterie (1) selon la revendication 7, dans lequel l'élément de batterie (1) est configuré pour fournir de l'énergie électrique.

10. Procédé de fabrication d'un ensemble électrode (13), comprenant :
la fourniture d'une première feuille d'électrode (131), la première feuille d'électrode (131) présentant une première jointure cassée (1313), et la première jointure cassée (1313) s'étendant dans la direction de largeur de la première feuille d'électrode (131) pour casser la première feuille d'électrode (131) en deux parties séparées ;
la fourniture d'une pluralité de secondes feuilles d'électrode (132), la polarité de la seconde feuille d'électrode (132) étant opposée à celle de la première feuille d'électrode (131) ; et
la flexion de la première feuille d'électrode (131) pour former une pluralité de segments de flexion (1311) et une pluralité de segments d'empilage (1312), chacun des segments de flexion (1311) connectant deux segments d'empilage adjacents (1312), et chacune des secondes feuilles d'électrode (132) étant disposée entre deux segments d'empilage adjacents (1312) dans la direction d'empilage de la pluralité de segments d'empilage (1312) ;
dans lequel l'ensemble électrode (13) comprend en outre :
deux membranes (133) fixées sur les deux côtés de la première feuille d'électrode (131) dans la direction d'épaisseur, respectivement, pour isoler la première feuille d'électrode (131) et la seconde feuille d'électrode (132),
dans lequel chaque membrane (133) est une structure en bande continue, et les deux parties distinctes de la première feuille d'électrode (131) sur les deux côtés de la première jointure cassée (1313) sont connectées par les membranes (133).

11. Procédé de fabrication d'un ensemble électrode (13) selon la revendication 10,
le procédé de fabrication d'un ensemble électrode (13) comprenant en outre :
la fourniture de deux membranes (133), chaque membrane (133) étant une structure en bande continue,
dans lequel, avant que la première feuille d'électrode (131) ne soit fléchie, les deux membranes (133) sont fixées sur les deux côtés de la première feuille d'électrode (131) dans la direction d'épaisseur, respectivement, et la pluralité de secondes feuilles d'électrode (132) est fixée sur le côté de chaque membrane (133) détourné de la première feuille d'électrode (131).

12. Procédé de fabrication d'un ensemble électrode (13) selon la revendication 11, dans lequel dans l'étape de fixation de la pluralité de secondes feuilles d'électrode (132) sur le côté de chaque membrane (133) détourné de la première feuille d'électrode (131), la pluralité de secondes feuilles d'électrode (132) est fixée symétriquement sur les deux côtés de la première feuille d'électrode (131).

13. Dispositif de fabrication d'un ensemble électrode (13), comprenant : un module d'approvisionnement (501) configuré pour fournir une première feuille d'électrode (131) et fournir une pluralité de secondes feuilles d'électrode (132), dans lequel la première feuille d'électrode (131) présente une première jointure cassée (1313), la première jointure cassée (1313) s'étend dans la direction de largeur de la première feuille d'électrode (131) pour casser la première feuille d'électrode (131) en deux parties séparées, et la polarité de la seconde feuille d'électrode (132) est opposée à celle de la première feuille d'électrode (131) ; et
un module d'assemblage (502) configuré pour fléchir la première feuille d'électrode (131) afin de former une pluralité de segments de flexion (1311) et une pluralité de segments d'empilage (1312) disposés en couches, dans lequel chacun des segments de flexion (1311) est configuré pour connecter deux segments d'empilage adjacents (1312), et chacune des secondes feuilles d'électrode (132) est disposée entre deux segments d'empilage adjacents (1312) dans la direction d'empilage de la pluralité de segments d'empilage (1312) ;
dans lequel l'ensemble électrode (13) comprend en outre :
deux membranes (133) fixées sur les deux côtés de la première feuille d'électrode (131) dans la direction d'épaisseur, respectivement, pour isoler la première feuille d'électrode (131) et la seconde feuille d'électrode (132),
dans lequel chaque membrane (133) est une structure en bande continue, et les deux parties séparées de la première feuille d'électrode (131) de chaque côté de la première jointure cassée (1313) sont connectées par les membranes (133).
